# EUROPEAN PATENT SPECIFICATION

(11) **EP 4 454 858 B1**
(45) Date of publication and mention of the grant of the patent: **26.11.2025**
(21) Application number: 24171500.2
(22) Date of filing: 22.04.2024
(51) Int. Cl.: B29C 57/08, B29C 57/04, B29B 13/02

(54) **METHOD AND APPARATUS FOR FORMING SMOOTH BELLS IN THERMOPLASTIC MATERIAL PIPES**
VERFAHREN UND VORRICHTUNG ZUM FORMEN GLATTER MUFFEN AN ROHREN AUS THERMOPLASTISCHEM KUNSTSTOFF
PROCÉDÉ ET DISPOSITIF POUR FORMER DES CLOCHES LISSES DANS DES TUYAUX EN MATIÈRE THERMOPLASTIQUE

(30) Priority: 26.04.2023 IT 202300008151
(43) Date of publication of application: 30.10.2024
(73) Proprietor: SICA S.P.A., 48011 Alfonsine (Ravenna) (IT)
(72) Inventor: TABANELLI, Giorgio, 48011 Alfonsine (RA) (IT)
(74) Representative: Studio Torta S.p.A.

(56) References cited:
- EP-B1- 0 700 771

## Description

### TECHNICAL FIELD

The present invention relates to an apparatus for forming smooth bells in thermoplastic material pipes.

An apparatus for forming bells in thermoplastic material pipes according to the preamble of Claim 1 is known from Document EP-700771-B1.

The present invention is particularly advantageous for use in the forming of smooth bells in pipes made of thermoplastic material, such as polypropylene (PP) and high density polyethylene (HDPE), and used to convey fluids or to protect electrical cables, optical fibres, or artesian wells, to which the description below will refer explicitly without loss of generality.

Moreover, the present invention is particularly advantageous for use in a machine for belling pipes configured to be installed at the outlet of a pipe extrusion unit, to which the following description will refer explicitly without loss of generality.

### BACKGROUND

In the pipe belling field, it is known to provide a machine of the type comprising an inlet station connected to an extrusion unit to receive a succession of pipes fed longitudinally in a first direction parallel to the longitudinal axes of the pipes themselves; at least one heating station aligned with the inlet station in a second direction transverse to the first direction; at least one belling station aligned with the heating station in the second direction; and an outlet station obtained on the opposite side from the inlet station relative to the heating and belling stations in the second direction.

The machine further comprises a conveying device for moving each pipe in the second direction from the inlet station to the outlet station through the heating and belling stations.

The belling station comprises a clamp provided with two jaws, which are movable between a clamping position and a release position of the free end of a pipe, a carriage, which is mounted in order to carry out rectilinear movements in the first direction, and an apparatus for belling pipes mounted on the carriage itself.

The apparatus comprises an outer matrix with a tubular shape, which has a longitudinal axis, is configured to receive a heated free end of a pipe, and comprises, in turn, two semi-cylindrical shells which are movable relative to each other transversely to the longitudinal axis between a closed operating position and an open idle position.

The outer matrix is delimited by a shaped inner surface comprising a narrow portion with a cylindrical shape, a wide portion with a cylindrical or truncated-cone shape, and an intermediate portion with a truncated-cone shape which is arranged between the narrow portion and the wide portion.

The apparatus further has an inner spindle, which is movable inside the outer matrix and the free end of the pipe, and which is delimited by a shaped outer surface comprising a narrow portion with a cylindrical shape which is configured to engage the pipe, a wide portion with a cylindrical or truncated-cone shape, and an intermediate portion with a truncated-cone shape which is arranged between the narrow portion and the wide portion.

The apparatus further comprises an intermediate sleeve which is movable between the outer matrix and the inner spindle and is delimited by an end face axially facing the free end of the pipe; a first variable-volume chamber which is at least partly delimited by the inner spindle and by the free end of the pipe; a second variable-volume chamber which is at least partly delimited by the outer matrix and by the free end of the pipe; a first supply circuit which is at least partly obtained through the inner spindle and is connected to the first variable-volume chamber in the area of the narrow portion to supply a fluid under pressure to the first variable-volume chamber and shape the free end of the pipe against the outer matrix; and a second supply circuit which is at least partly obtained through the outer matrix and is connected to the second variable-volume chamber to supply a fluid under pressure to the second variable-volume chamber and shape the free end of the pipe against the inner spindle.

By combining the action of the fluids under pressure supplied in the two variable-volume chambers with the axial movements of the inner spindle and of the intermediate sleeve relative to the outer matrix, the free end of the pipe is shaped so as to form a bell having, normally, an inlet segment with a cylindrical or truncated-cone shape, an outlet segment with a truncated-cone shape, and a seat which is obtained in the area of the inlet segment to house therein a gasket.

The known apparatus for belling thermoplastic material pipes of the type described above have some drawbacks, mainly deriving from the fact that, wishing to manufacture a bell that is smooth and does not have the seat for housing the gasket using an outer matrix with a wide portion that does not have a corresponding slot for forming the seat itself, the first supply circuit is unable to ensure fluid-tight coupling between the free end of the pipe and the outer matrix, which is essential to ensure correct pressurisation of the first variable-volume chamber and correct forming of the bell.

In fact, in known apparatus for belling thermoplastic material pipes of the type described above, the fluid-tight coupling between the free end of the pipe and the outer matrix is ensured by combining the axial pressure exerted by the intermediate sleeve against the free end of the pipe with the action of the fluids under pressure. The axial pressure exerted by the intermediate sleeve against the free end of the pipe plastically deforms the material of the bell being formed inside the slot for shaping the seat for the gasket.

Consequently, when the bell is smooth and does not have the seat for housing the gasket, known apparatus of the type described above are unable to ensure the plastic deformation of the material of the bell being formed and, therefore, the fluid-tight coupling between the free end of the pipe and the outer matrix.

### SUMMARY

The object of the present invention is to provide an apparatus for forming smooth bells in thermoplastic material pipes which does not have the drawbacks described above.

According to the present invention, there is provided an apparatus for forming smooth bells in thermoplastic material pipes according to what is claimed in the appended claims 1 to 7.

The present invention also relates to a method for forming smooth bells in thermoplastic material pipes.

According to the present invention a method is provided for forming smooth bells in thermoplastic material pipes according to what is claimed in the appended claims 8 to 10.

### BRIEF DESCRIPTION OF THE DRAWINGS

The present invention will now be described with reference to the accompanying drawings, which illustrate a non-limiting example of embodiment thereof, wherein:
Fig. 1 is a schematic perspective view, with parts removed for clarity, of a preferred embodiment of the apparatus of the present invention mounted in a machine for forming a bell in pipes;
Fig. 2 is a longitudinal section of a pipe produced with the apparatus of Fig. 1;
Fig. 3 is a schematic longitudinal section, with parts removed for clarity, of a detail of the apparatus of Fig. 1;
Fig. 4 is an exploded perspective view of a detail of Fig. 3;
Fig. 5 is a longitudinal section of a detail of Fig. 4; and
Figs. 6 to 11 are six schematic longitudinal sections, with parts enlarged and parts removed for clarity, of the detail of Fig. 3 illustrated in six different operating positions.

### DESCRIPTION OF EMBODIMENTS

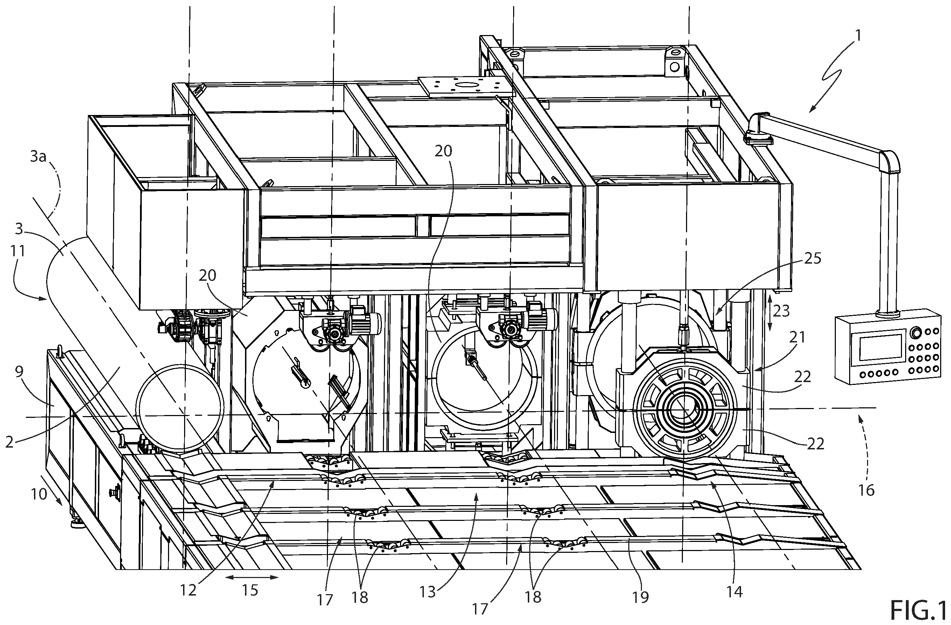

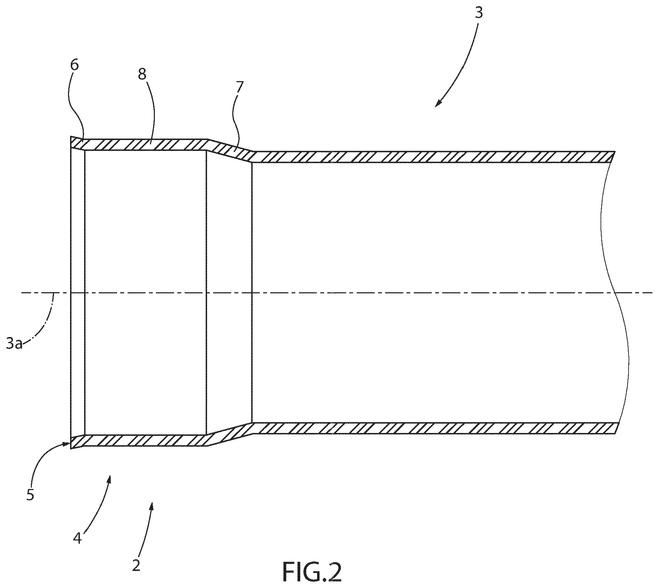

With reference to Figs. 1 and 2, the reference number 1 indicates, as a whole, a machine for belling ends 2 of pipes 3 made of thermoplastic material, such as polypropylene (PP) or high density polyethylene (HDPE).

Each pipe 3 has, in an initial configuration, a cylindrical shape and a circular cross section and, in a final configuration, a smooth bell 4, which is obtained in the area of the end 2, and comprises, starting from a free end face 5, an inlet segment 6 with a truncated-cone shape, an outlet segment 7 with a truncated-cone shape, and an intermediate segment 8 with a cylindrical shape arranged between the segments 6 and 7.

The machine 1 comprises a base 9 of elongated shape extending in a horizontal direction 10, and has an inlet station 11 connected to an extrusion unit (not shown) to receive a succession of pipes 3, which are fed into the station 11 parallel to their longitudinal axes 3a and to the direction 10 itself.

The machine 1 further comprises, in succession and in order, a first heating station 12 of known type, a second heating station 13 of known type, and a belling and cooling station 14 aligned with one another in a horizontal direction 15 transverse to the direction 10.

The machine 1 further comprises an outlet station 16 arranged on the opposite side of the station 11 relative to the stations 12, 13, 14 in the direction 15.

Each station 12, 13, 14 is provided with a support unit 17, which extends in the direction 10, and comprises a plurality of support devices 18 configured to receive the pipes 3.

The machine 1 is further provided with a conveying device 19 of known type to move the pipes 3 from the station 11 to the station 16 and through the stations 12, 13, 14 in the direction 15.

Each heating station 12, 13 is provided with an oven 20 which is movable, relative to the base 9 and in the direction 10, between a forward operating position, in which the oven 20 engages and heats the end 2 of the pipe 3 arranged time by time in the station 12, 13, and a withdrawn idle position, in which the oven 20 disengages the end 2 itself.

The belling station 14 comprises a clamp 21 which is provided with two gripping jaws 22 coupled in a sliding manner to the base 9 in order to move, relative to the base 9, in a vertical direction 23 orthogonal to the directions 10 and 15 between a clamping position and a release position of the pipe 3 arranged time by time in the station 14 itself.

The station 14 is further provided with a carriage, known and not shown, which is coupled in a sliding manner to the base 9 in order to carry out, relative to the base 9 and under the thrust of an actuating device, known and not shown, rectilinear movements in the direction 10.

The carriage (not shown) supports a forming unit 25, which is moved by the carriage (not shown) between a forward operating position, in which the unit 25 engages the end 2 of the pipe 3 arranged time by time in the station 14 to form the bell 4, and a withdrawn idle position, in which the unit 25 disengages the end 2 in order to allow the conveying device 19 to transfer the pipe 3 from the station 13 to the station 14 and from the station 14 to the station 16.

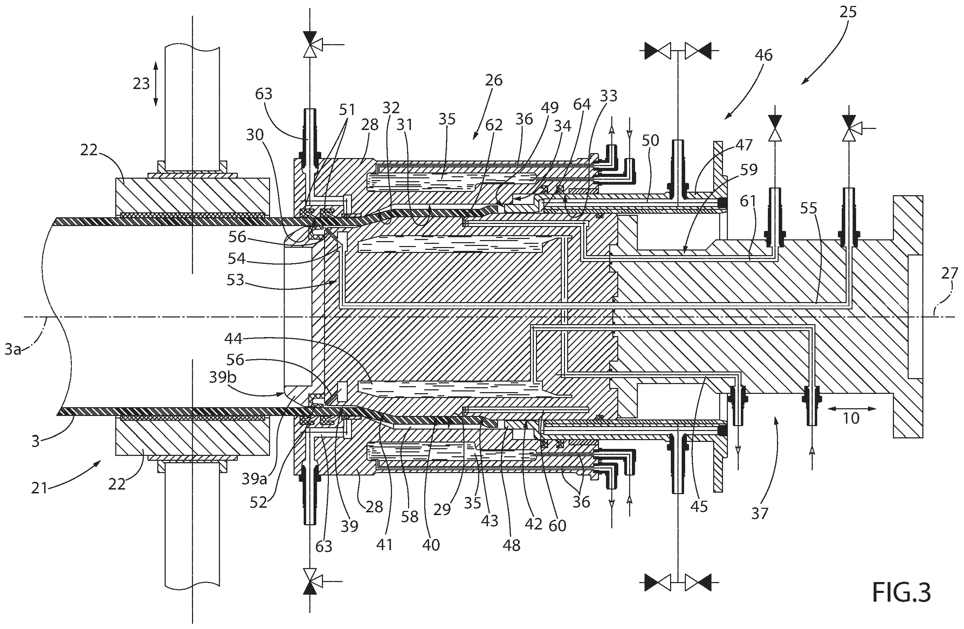

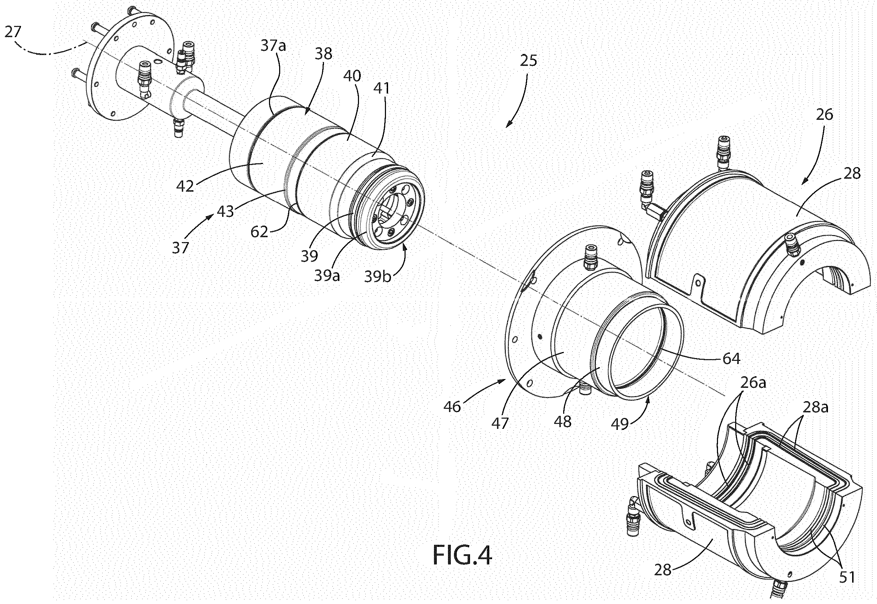

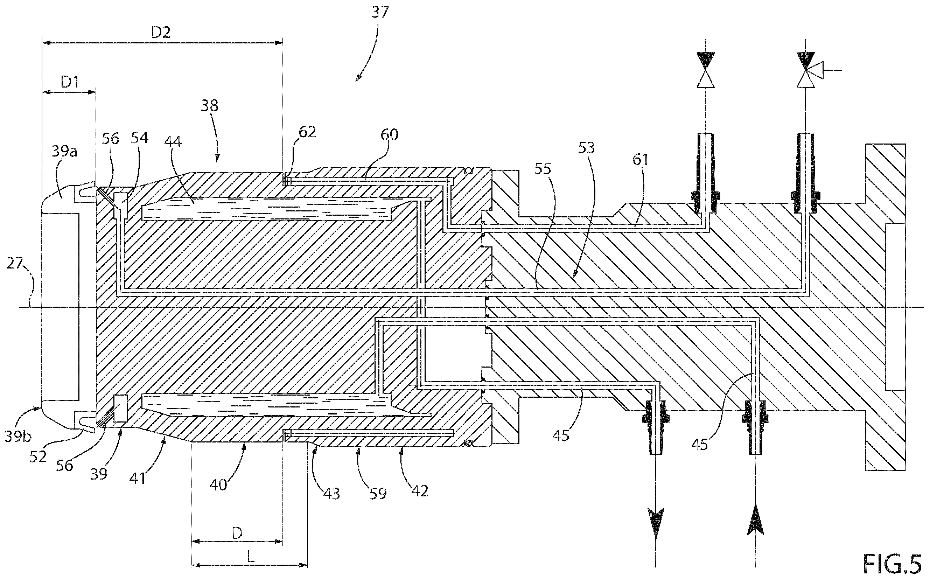

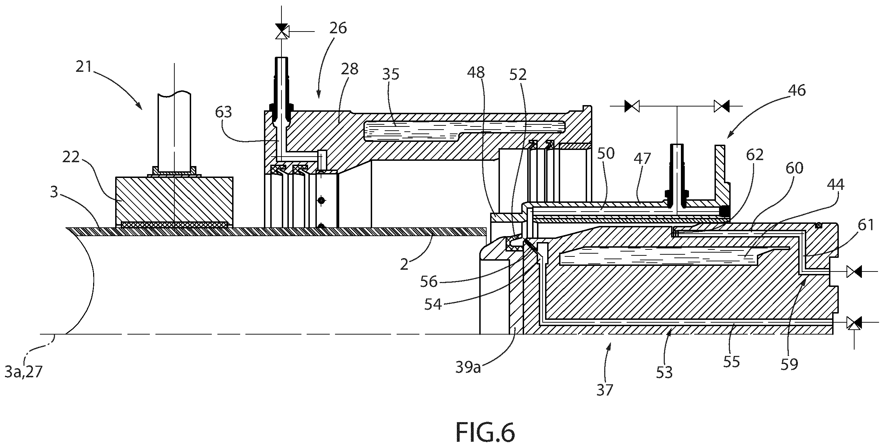

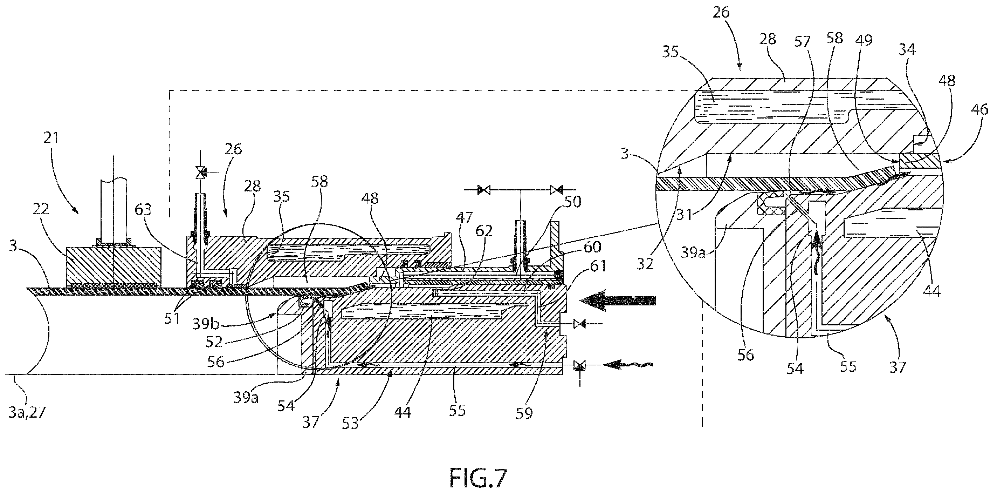

According to what is shown in Figs. 3, 4, and 5, the forming unit 25 comprises an outer matrix 26 with a tubular shape, which is mounted on the carriage 24, has a longitudinal axis 27, and comprises, in turn, two semi-cylindrical shells 28 coupled in a sliding manner to the carriage 24 in order to carry out, relative to the carriage 24, rectilinear movements in the direction 23 between an open position (Fig. 6), in which the matrix 26 is inserted over the end 2 of the pipe 3, and a closed position (Fig. 7), in which the shells 28 are coupled in a fluid-tight manner to the end 2 of the pipe 3 through the interposing of gaskets 28a mounted in corresponding slots obtained on the flat coupling surface of each shell 28.

When the two shells 28 are arranged in the closed position, the matrix 26 is laterally delimited by an inner surface 29, which extends around the axis 27, and comprises a narrow portion 30 with a cylindrical shape having a diameter slightly larger than the outer diameter of the pipe 3, a first wide portion 31 with a cylindrical shape, an intermediate portion 32 with a truncated-cone shape which is arranged between the portions 30 and 31, and a second wide portion 33 with a cylindrical shape, which is connected to the portion 31 in the area of an annular shoulder 34 substantially perpendicular to the axis 27.

Each shell 28 is further provided with a cooling chamber 35 extending around the axis 27 and with a cooling circuit 36, which is at least partly obtained through the shell 28 to feed a cooling fluid through the chamber 35 itself.

The forming unit 25 further comprises an inner spindle 37 of elongated shape, which extends in the direction 10, is coaxial to the axis 27, and is coupled in a sliding manner to the carriage 24 in order to carry out, relative to the carriage 24 and to the matrix 26 and under the thrust of an actuating device, known and not shown, rectilinear movements in the direction 10.

The spindle 37 is laterally delimited by an outer surface 38, which extends around the axis 27, and comprises a narrow portion 39 with a cylindrical shape, which has a diameter slightly smaller than the inner diameter of the pipe 3, and which is provided with an insertion tip 39a axially delimited by an end face 39b.

The surface 38 further comprises a first wide portion 40 with a cylindrical shape, a first intermediate portion 41 with a truncated-cone shape, which is arranged between the portions 39 and 40, a second wide portion 42 with a cylindrical shape, and a second intermediate portion 43 with a truncated-cone shape, which is arranged between the portions 40 and 42.

The spindle 37 is further provided with an annular shaped cooling chamber 44, which extends around the axis 27, and with a cooling circuit 45, which is at least partly obtained through the spindle 37 to feed a cooling fluid through the chamber 44 itself.

Finally, the forming unit 25 comprises an intermediate sleeve 46, which is mounted between the matrix 26 and the spindle 37 coaxially to the axis 27, is engaged in a sliding manner by the spindle 37, and is coupled in a sliding manner to the spindle 37 in order to carry out, relative to the matrix 26 and to the spindle 37, rectilinear movements in the direction 10.

The sleeve 46 is inserted onto the spindle 37, and comprises a wide portion 47 which is coupled in a sliding manner to the wide portion 33 of the matrix 26 and to the wide portion 42 of the spindle 37 and a narrow portion 48, which is delimited by an end face 49 perpendicular to the axis 27, and which is coupled in a sliding manner to the wide portion 31 of the matrix 26.

The portion 47 is provided with a draining chamber 50, which has, at least partly, an annular shape, which extends around the axis 27, and which is selectively connectable to the outside environment.

Operation of the forming unit 25 will now be described with reference to Figs. 6 to 11 and starting from an instant in which (Fig. 6):
a pipe 3 is arranged in the belling station 14 with its end 2 heated in the heating stations 12, 13;
the jaws 22 of the clamp 21 are arranged in their clamping position of the pipe 3;
the unit 25 is arranged in its forward operating position;
the shells 28 of the matrix 26 are arranged around the end 2 and in their open position; and
the spindle 37 is arranged outside the end 2 itself.

At this point, the shells 28 are moved into their closed position to couple to the end 2 in a fluid-tight manner by means of a pair of annular gaskets 51 mounted on the narrow portion 30 of the inner surface 29 of the matrix 26; and the spindle 37 is moved, relative to the carriage 24, in the direction 10 so as to engage the narrow portion 39 and the intermediate portion 41 in the end 2 of the pipe 3 and to couple the portion 39 to the inner surface of the pipe 3 in a fluid-tight manner by means of an annular gasket 52 mounted on the portion 39 (Fig. 7).

Insertion of the portions 39 and 41 into the end 2 of the pipe 3 is facilitated by a fluid under pressure, in this case compressed air, supplied on the outside of the portion 39 by a first supply circuit 53, which is at least partly obtained through the spindle 37 and which is selectively connectable with the outside environment or with a device for supplying the fluid under pressure, known and not shown.

The circuit 53 comprises an annular chamber 54, which is obtained through the portion 39, extends around the axis 27, is connected to a duct 55 for supplying the fluid under pressure, and which communicates with the outside through a plurality of outlet holes 56.

The holes 56 are obtained through the portion 39, are distributed around the axis 27, and are inclined according to an angle between 0° and 90° relative to the axis 27 itself.

The spindle 37 is moved further forward, relative to the matrix 26, in the direction 10 so as to engage the wide portion 40, the intermediate portion 43, and an initial segment of the wide portion 42 in the end 2.

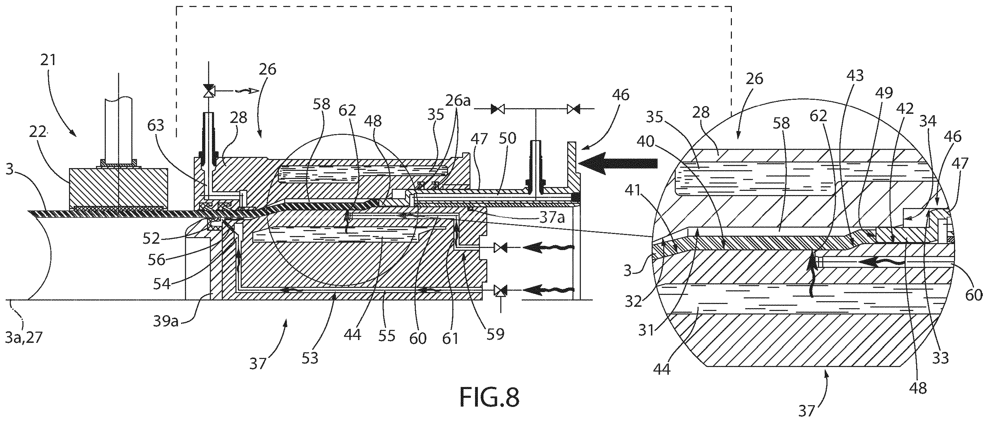

When the spindle 37 is stopped, the intermediate sleeve 46 is moved forward, relative to the spindle 37, in the direction 10 so as to move the end face 49 preferably, but not necessarily, into contact with the end 2 (Fig. 8).

The fluid-tight coupling between the spindle 37 and the sleeve 46 is ensured by at least one gasket 37a and the fluid-tight coupling between the matrix 26 and the sleeve 46 is ensured by at least one gasket 26a.

In this operating condition, the end 2 and the spindle 37 at least partly delimit a first variable-volume chamber 57 and the end 2 and the matrix 26 at least partly delimit a second variable-volume chamber 58.

The chamber 57 is supplied with a fluid under pressure, in this case compressed air, both by means of the circuit 53, and by means of a second supply circuit 59, which is at least partly obtained through the spindle 37.

The circuit 59 comprises an annular chamber 60, which extends around the axis 27, is connected to a duct 61 for supplying the fluid under pressure, and communicates with the outside through an annular opening 62 which is obtained on the portion 40 of the surface 38 coaxially to the axis 27 itself.

The opening 62 is obtained at a distance D from the intermediate portion 41, measured parallel to the axis 27, that is at most equal to a length L of the wide portion 40 also measured parallel to the axis 27 and in any case greater than half the length L itself.

Consequently, the supply circuits 53, 59 are connected to the chamber 57 at respective distances D1, D2 from the face 39b, of which the distance D2 is greater than the distance D1.

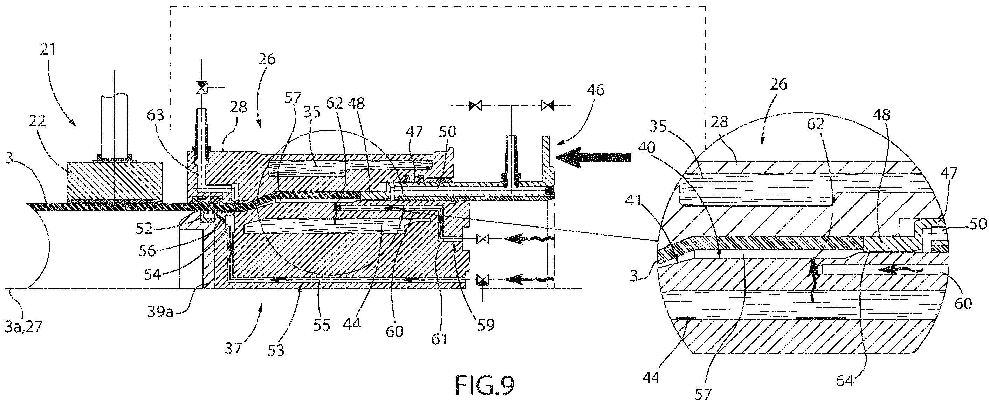

With reference to Fig. 9, the wide portion 42 of the spindle 37 engaged in the end 2 of the pipe 3 and the thrust of the fluid under pressure supplied in the chamber 57 by means of the circuit 59 allow:
shaping of the end 2 against the inner surface 29 of the matrix 26;
fluid-tight coupling of the end 2 with the matrix 26 so as to ensure the seal of the chamber 57; and
discharging the fluid under pressure contained in the chamber 58 along a supply circuit 63 which is obtained through each shell 28 of the matrix 26 and which can be selectively connected to the outside environment or to a device for supplying a fluid under pressure, in this case compressed air, known and not shown.

With regard to the description above, it should be specified that, during belling of the end 2 against the surface 29:
the sleeve 46 is moved, relative to the spindle 37, in the direction 10 so as to maintain the face 49 preferably, but not necessarily, in contact with the end 2 and so as to offset the contraction of the end 2 itself; and
the end 2 is cooled by the cooling fluid fed through the cooling chamber 35 by means of the cooling circuit 36.

At this point, the supply of the fluid under pressure along the circuit 59 is interrupted; the fluid under pressure contained in the chamber 57 seeps between the spindle 37 and the sleeve 46 and is discharged into the outside environment through an annular opening 64 which is obtained on the inner surface of the sleeve 46 and is connected to the draining chamber 50; and the supply of the fluid under pressure along the circuit 53 is interrupted.

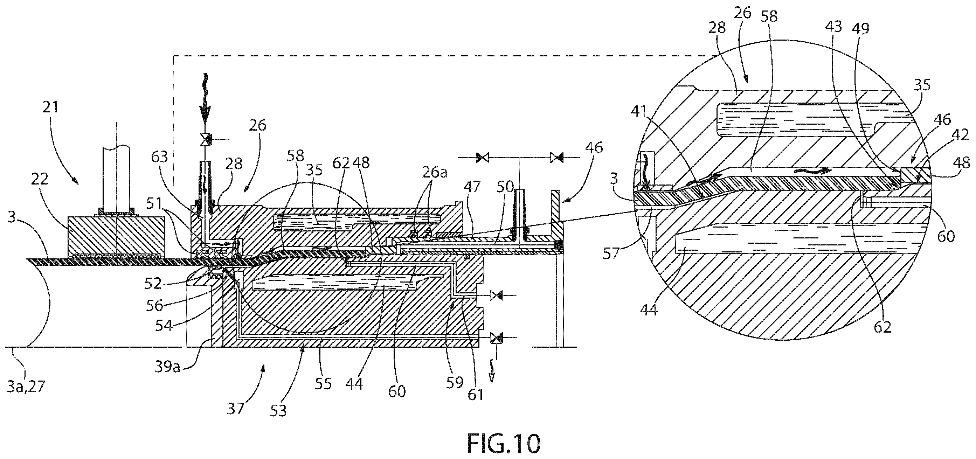

According to what is shown in Fig. 10, the draining chamber 50 is closed; the supply circuit 63 is activated to supply the fluid under pressure to the chamber 58, shape the end 2 on the spindle 37, and form the bell 4; the end 2 is deformed and held in contact with the face 49 of the sleeve 46 so as to ensure the seal of the chamber 58; and the circuit 53 is connected to the outside environment to discharge the fluid under pressure contained in the chamber 57.

At this point, during the supply of fluid under pressure to the chamber 58, the spindle 37 is withdrawn so as to disengage the wide portion 42 and so as to define the configuration and sizing of the inlet segment 6 and complete forming of the bell 4; and the end 2 is cooled by the cooling fluid fed through the cooling chamber 44 by means of the cooling circuit 45.

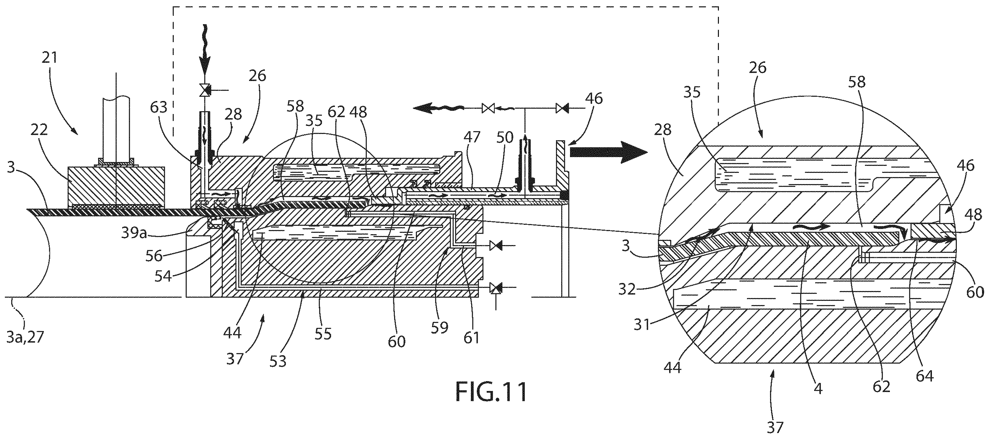

Finally, the face 49 of the sleeve 46 is separated from the end 2 and the draining chamber 50 is connected to the outside environment in order to allow the fluid under pressure contained in the chamber 58 firstly to seep between the spindle 37 and the sleeve 46 and then to be discharged into the outside environment through the opening 64 and the chamber 50 itself (Fig. 11).

After the bell 4 has been formed, the supply of fluid under pressure in the chamber 58 is interrupted, the discharge of fluid under pressure into the environment through the chamber 50 is interrupted, the spindle 37 is disengaged from the bell 4, the sleeve 46 is withdrawn in the direction 10, the shells 28 are opened, the unit 25 is moved into its withdrawn idle position, and the jaws 22 are moved into their release position.

According to a variant, not shown, the inlet segment 6 of the bell 4 is eliminated, disengaging both the wide portion 42, and the intermediate portion 43 from the end 2 during the supply of fluid under pressure to the chamber 58.

According to a further variant, not shown, the wide portion 40 of the spindle 37 is eliminated and replaced with a portion with a truncated-cone shape and the intermediate segment 8 of the bell 4 is eliminated and replaced with a segment with a truncated-cone shape.

The forming unit 25 allows smooth bells 4 to be produced in a single belling and cooling station 14 of the machine **1.**

The forming unit 25 also has further advantages, mainly deriving from the fact that the engagement of the initial segment of the wide portion 42 of the spindle 37 in the end 2 of the pipe 3 and the supply of fluid under pressure to the chamber 57 by means of the supply circuit 59 allow the end 2 of the pipe 3 to be coupled to the matrix 26 in a fluid-tight manner and the production of bells 4 with a smooth inner surface.

In particular, the operating mode of the forming unit 25, distinguished by the step of expanding the end 2 against the portions 31, 32 of the inner surface 29 of the matrix 26 followed by the step of contracting the end 2 against the portions 40, 43 of the outer surface 38 of the spindle 37, allows the production of smooth bells 4, the inner dimensions of which are calibrated by the spindle 37, exempt from, or little influenced by, the effects of post-shrinkage due to elastic memory of the smaller dimensions of the pipes 3.

In other words, the forming unit 25 allows the production of smooth bells 4 which, in normal conditions of storage and installation of the pipes 3, maintain stable shapes and dimensions over time.

The manufacture in polypropylene (PP) and high density polyethylene (HDPE) pipes 3 of smooth bells 4 having the aforesaid features of precision and dimensional stability, make the bells 4 also suitable for a subsequent integration, inside the bells 4 themselves, of an electrical heating coil to produce electrofusion welded bell joints.

The forming unit 25 further allows:
the production of bells 4 with or without inlet segment 6;
the production of bells 4 with a cylindrical or conical segment 8; and
selective control of the position of the spindle 37 in the direction 10 and, hence, of the length of the inlet segment 6.

## Claims

1. An apparatus for forming smooth bells in thermoplastic material pipes (3), the apparatus comprising an outer matrix (26) with a tubular shape, which has a given longitudinal axis (27) and is configured to receive a heated free end (2) of a pipe (3); an inner spindle (37), which is movable inside the outer matrix (26) and the free end (2) of the pipe (3) and comprises a narrow portion (39) with a cylindrical shape, which is configured to engage the pipe (3), a first wide portion (40) with a cylindrical or truncated-cone shape, a first intermediate portion (41) with a truncated-cone shape, which is arranged between the narrow portion (39) and the first wide portion (40), a second wide portion (42) with a cylindrical shape, and a second intermediate portion (43) with a truncated-cone shape, which is arranged between said first and second wide portion (40, 42); at least one first variable-volume chamber (57), which is at least partly delimited by the inner spindle (37) and by the free end (2) of the pipe (3); an intermediate sleeve (46), which is movable between the outer matrix (26) and the inner spindle (37) and is delimited by an end face (49) axially facing the free end (2) of the pipe (3); and a first supply circuit (53), which is at least partly obtained through the inner spindle (37) and is connected to the first variable-volume chamber (57) at a first distance (D1) from an end face (39b) of the inner spindle (37) in order to supply a fluid under pressure to the first variable-volume chamber (57); and being **characterized in that** it further comprises a second supply circuit (59), which is at least partly obtained through the inner spindle (37) and is connected to the first variable-volume chamber (57) at a second distance (D2) from the end face (39b) of the inner spindle (37) in order to supply a fluid under pressure to the first variable-volume chamber (57), couple the free end (2) of the pipe (3) and the outer matrix (26) to one another in a fluid-tight manner and shape the free end (2) of the pipe (3) against the outer matrix (26); the second distance (D2) being greater than the first distance (D1).

2. The apparatus according to claim 1, wherein said first and second supply circuit (53, 59) are connected to the first variable-volume chamber (57) in the area of the narrow portion (39) and of the first wide portion (40), respectively.

3. The apparatus according to claim 2, wherein the second supply circuit (59) is connected to the first variable-volume chamber (57) at a distance (D) from the first intermediate portion (41) that is at most equal to a length (L) of the first wide portion (40) and at least equal to half the length (L) itself.

4. The apparatus according to any one of the preceding claims and further comprising a first cooling chamber (44), which is obtained through the inner spindle (37) around the longitudinal axis (27), and a first cooling circuit (45) to feed a cooling fluid through the first cooling chamber (44).

5. The apparatus according to any one of the preceding claims and further comprising a second cooling chamber (35), which is obtained through the outer matrix (26) around the longitudinal axis (27), and a second cooling circuit (36) to feed a cooling fluid through the second cooling chamber (35).

6. The apparatus according to any one of the preceding claims and further comprising a second variable-volume chamber (58), which is at least partly delimited by the outer matrix (26) and by the free end (2) of the pipe (3), and a third supply circuit (63), which is at least partly obtained through the outer matrix (26) and is connected to the second variable-volume chamber (58) in order to supply a fluid under pressure to the second variable-volume chamber (58) and shape the free end (2) of the pipe (3) against the inner spindle (37).

7. The apparatus according to claim 1 or 6, wherein the intermediate sleeve (46) comprises a draining circuit (50), which is obtained through the intermediate sleeve (46) and has an inlet opening (64), which is obtained on an inner surface of the intermediate sleeve (46) in order to discharge the fluid under pressure supplied to the first variable-volume chamber (57) by the first supply circuit (53) and/or the fluid under pressure supplied to the first variable-volume chamber (57) by the second supply circuit (59) and/or the fluid under pressure supplied to the second variable-volume chamber (58) by the third supply circuit (63) into the outside environment.

8. A method for forming smooth bells in thermoplastic material pipes (3) in an apparatus comprising an outer matrix (26) with a tubular shape, which has a given longitudinal axis (27) and is configured to receive a heated free end (2) of a pipe (3); an inner spindle (37), which is movable inside the outer matrix (26) and the free end (2) of the pipe (3) and comprises a narrow portion (39) with a cylindrical shape, which is configured to engage the pipe (3), a first wide portion (40) with a cylindrical or truncated-cone shape, a first intermediate portion (41) with a truncated-cone shape, which is arranged between the narrow portion (39) and the first wide portion (40), a second wide portion (42) with a cylindrical shape and a second intermediate portion (43) with a truncated-cone shape, which is arranged between said first and second wide portion (40, 42); at least one first variable-volume chamber (57), which is at least partly delimited by the inner spindle (37) and by the free end (2) of the pipe (3); and an intermediate sleeve (46), which is movable between the outer matrix (26) and the inner spindle (37) and is delimited by an end face (49) axially facing the free end (2) of the pipe (3);
the method comprising the steps of:
supplying a fluid under pressure to the first variable-volume chamber (57) by means of a first supply circuit (53), which is at least partly obtained through the inner spindle (37) and is connected to the first variable-volume chamber (57) at a first distance (D1) from an end face (39b) of the inner spindle (37); and
moving the inner spindle (37), relative to the outer matrix (26), in an insertion direction (10) so as to engage the first wide portion (40), the second intermediate portion (43) and an initial segment of the second wide portion (42) in the free end (2);
and being **characterized in that** it further comprises the step of:
supplying a fluid under pressure to the first variable-volume chamber (57) so as to couple the free end (2) of the pipe (3) and the outer matrix (26) to one another in a fluid-tight manner and shape the free end (2) of the pipe (3) against the outer matrix (26) by means of a second supply circuit (59), which is at least partly obtained through the inner spindle (37) and is connected to the first variable-volume chamber (57) at a second distance (D2) from the end face (39b) of the inner spindle (37), which is greater than the first distance (D1).

9. The method according to claim 8, wherein the apparatus further comprises a second variable-volume chamber (58), which is at least partly delimited by the outer matrix (26) and by the free end (2) of the pipe (3);
the method further comprising the step of:
supplying a fluid under pressure to the second variable-volume chamber (58) so as to shape the free end (2) on the inner spindle (37) and form a smooth bell (4) by means of a third supply circuit (63), which is at least partly obtained through the outer matrix (26) and is connected to the second variable-volume chamber (58).

10. The method according to claim 9, wherein the supply of the fluid under pressure to the second variable-volume chamber (58) deforms the free end (2) of the pipe (3) so as to hold it in contact with the end face (49) of the intermediate sleeve (46) and ensure the fluid-tight seal of the second variable-volume chamber (58).

## Patentansprüche

1. Vorrichtung zum Formen von glatten Glocken in Rohren (3) aus thermoplastischem Material, wobei die Vorrichtung eine äußere Matrize (26) mit einer rohrförmigen Form, die eine gegebene Längsachse (27) aufweist und konfiguriert ist, um ein erwärmtes freies Ende (2) eines Rohres (3) aufzunehmen; eine innere Spindel (37), die innerhalb der äußeren Matrize (26) und des freien Endes (2) des Rohres (3) beweglich ist und einen schmalen Abschnitt (39) mit einer zylindrischen Form umfasst, der konfiguriert ist, um das Rohr (3) einzugreifen, einen ersten breiten Abschnitt (40) mit einer zylindrischen oder Kegelstumpfform, einen ersten Zwischenabschnitt (41) mit einer Kegelstumpfform, der zwischen dem schmalen Abschnitt (39) und dem ersten breiten Abschnitt (40) angeordnet ist, einen zweiten breiten Abschnitt (42) mit einer zylindrischen Form und einen zweiten Zwischenabschnitt (43) mit einer Kegelstumpfform, der zwischen dem ersten und zweiten breiten Abschnitt (40, 42) angeordnet ist; mindestens eine erste volumenveränderliche Kammer (57), die zumindest teilweise durch die innere Spindel (37) und durch das freie Ende (2) des Rohres (3) begrenzt ist; eine Zwischenhülse (46), die zwischen der äußeren Matrize (26) und der inneren Spindel (37) beweglich ist und durch eine dem freien Ende (2) des Rohres (3) axial zugewandte Stirnfläche (49) begrenzt ist; und einen ersten Versorgungskreislauf (53), der zumindest teilweise durch die innere Spindel (37) erhalten ist und mit der ersten volumenveränderlichen Kammer (57) in einem ersten Abstand (D1) von einer Stirnfläche (39b) der inneren Spindel (37) verbunden ist, um der ersten volumenveränderlichen Kammer (57) ein Fluid unter Druck zuzuführen; und **dadurch gekennzeichnet, dass** sie ferner einen zweiten Versorgungskreislauf (59) umfasst, der zumindest teilweise durch die innere Spindel (37) erhalten ist und mit der ersten volumenveränderlichen Kammer (57) in einem zweiten Abstand (D2) von der Stirnfläche (39b) der inneren Spindel (37) verbunden ist, um der ersten volumenveränderlichen Kammer (57) ein Fluid unter Druck zuzuführen, um das freie Ende (2) des Rohrs (3) und die äußere Matrize (26) fluiddicht aneinander zu koppeln und das freie Ende (2) des Rohres (3) gegen die äußere Matrize (26) zu formen; wobei der zweite Abstand (D2) größer als der erste Abstand (D1) ist.

2. Vorrichtung nach Anspruch 1, wobei der erste und zweite Versorgungskreislauf (53, 59) mit der ersten volumenveränderlichen Kammer (57) im Bereich des schmalen Abschnitts (39) bzw. des ersten breiten Abschnitts (40) verbunden sind.

3. Vorrichtung nach Anspruch 2, wobei der zweite Versorgungskreislauf (59) mit der ersten volumenveränderlichen Kammer (57) in einem Abstand (D) von dem ersten Zwischenabschnitt (41) verbunden ist, der höchstens gleich einer Länge (L) des ersten breiten Abschnitts (40) und mindestens gleich der halben Länge (L) selbst ist.

4. Vorrichtung nach einem der vorhergehenden Ansprüche, die ferner eine erste Kühlkammer (44), die durch die innere Spindel (37) um die Längsachse (27) herum erhalten ist, und einen ersten Kühlkreislauf (45) zur Zuführung eines Kühlfluids durch die erste Kühlkammer (44) umfasst.

5. Vorrichtung nach einem der vorhergehenden Ansprüche, die ferner eine zweite Kühlkammer (35), die durch die äußere Matrize (26) um die Längsachse (27) herum erhalten ist, und einen zweiten Kühlkreislauf (36) zur Zuführung eines Kühlfluids durch die zweite Kühlkammer (35) umfasst.

6. Vorrichtung nach einem der vorhergehenden Ansprüche und ferner umfassend eine zweite volumenveränderliche Kammer (58), die zumindest teilweise durch die äußere Matrize (26) und durch das freie Ende (2) des Rohrs (3) begrenzt ist, und einen dritten Versorgungskreislauf (63), der zumindest teilweise durch die äußere Matrize (26) erhalten ist und mit der zweiten volumenveränderlichen Kammer (58) verbunden ist, um der zweiten volumenveränderlichen Kammer (58) ein Fluid unter Druck zuzuführen und das freie Ende (2) des Rohrs (3) gegen die innere Spindel (37) zu formen.

7. Vorrichtung nach Anspruch 1 oder 6, wobei die Zwischenhülse (46) einen Entleerungskreislauf (50) umfasst, der durch die Zwischenhülse (46) erhalten ist und eine Einlassöffnung (64) aufweist, die an einer Innenoberfläche der Zwischenhülse (46) erhalten ist, um das zu der ersten volumenveränderlichen Kammer (57) von dem ersten Versorgungskreislauf (53) zugeführte Fluid unter Druck und/oder das zu der ersten volumenveränderlichen Kammer (57) von dem zweiten Versorgungskreislauf (59) zugeführte Fluid unter Druck und/oder das zu der zweiten volumenveränderlichen Kammer (58) von dem dritten Versorgungskreislauf (63) zugeführte Fluid an die Außenumgebung abzugeben.

8. Verfahren zum Formen von glatten Glocken in Rohren (3) aus thermoplastischem Material in einer Vorrichtung, umfassend eine äußere Matrize (26) mit einer rohrförmigen Form, die eine gegebene Längsachse (27) aufweist und konfiguriert ist, um ein erwärmtes freies Ende (2) eines Rohres (3) aufzunehmen; eine innere Spindel (37), die innerhalb der äußeren Matrize (26) und des freien Endes (2) des Rohres (3) beweglich ist und einen schmalen Abschnitt (39) mit einer zylindrischen Form umfasst, der konfiguriert ist, um das Rohr (3) einzugreifen, einen ersten breiten Abschnitt (40) mit einer zylindrischen oder Kegelstumpfform, einen ersten Zwischenabschnitt (41) mit einer Kegelstumpfform, der zwischen dem schmalen Abschnitt (39) und dem ersten breiten Abschnitt (40) angeordnet ist, einen zweiten breiten Abschnitt (42) mit einer zylindrischen Form und einen zweiten Zwischenabschnitt (43) mit einer Kegelstumpfform, der zwischen dem ersten und zweiten breiten Abschnitt (40, 42) angeordnet ist; mindestens eine erste volumenveränderliche Kammer (57), die zumindest teilweise durch die innere Spindel (37) und durch das freie Ende (2) des Rohres (3) begrenzt ist; und eine Zwischenhülse (46), die zwischen der äußeren Matrize (26) und der inneren Spindel (37) beweglich ist und durch eine dem freien Ende (2) des Rohres (3) axial zugewandte Stirnfläche (49) begrenzt ist;
wobei das Verfahren die folgenden Schritte umfasst:
Zuführen eines Fluids unter Druck zu der ersten volumenveränderlichen Kammer (57) mittels eines ersten Versorgungskreislaufs (53), der zumindest teilweise durch die innere Spindel (37) erhalten ist und mit der ersten volumenveränderlichen Kammer (57) in einem ersten Abstand (D1) von einer Stirnfläche (39b) der inneren Spindel (37) verbunden ist; und
Bewegen der inneren Spindel (37) relativ zu der äußeren Matrize (26) in einer Einführrichtung (10), um den ersten breiten Abschnitt (40), den zweiten Zwischenabschnitt (43) und ein Anfangssegment des zweiten breiten Abschnitts (42) in dem freien Ende (2) in Eingriff zu nehmen;
und **dadurch gekennzeichnet ist, dass** es ferner den folgenden Schritt umfasst:
Zuführen eines Fluids unter Druck zu der ersten volumenveränderlichen Kammer (57), um das freie Ende (2) des Rohrs (3) und die äußere Matrize (26) fluiddicht miteinander zu koppeln und das freie Ende (2) des Rohrs (3) mittels eines zweiten Versorgungskreislaufs (59), der zumindest teilweise durch die innere Spindel (37) erhalten ist und mit der ersten volumenveränderlichen Kammer (57) in einem zweiten Abstand (D2) von der Stirnfläche (39b) der inneren Spindel (37) verbunden ist, der größer als der erste Abstand (D1) ist, gegen die äußere Matrize (26) zu formen.

9. Verfahren nach Anspruch 8, wobei die Vorrichtung ferner eine zweite volumenveränderlichen Kammer (58) umfasst, die zumindest teilweise durch die äußere Matrize (26) und durch das freie Ende (2) des Rohrs (3) begrenzt ist;
wobei das Verfahren ferner den folgenden Schritt umfasst:
Zuführen eines Fluids unter Druck zu der zweiten volumenveränderlichen Kammer (58), um das freie Ende (2) an der inneren Spindel (37) zu formen und eine glatte Glocke (4) mittels eines dritten Versorgungskreislaufs (63) zu formen, der zumindest teilweise durch die äußere Matrize (26) erhalten ist und mit der zweiten volumenveränderlichen Kammer (58) verbunden ist.

10. Verfahren nach Anspruch 9, wobei die Zufuhr des Fluids unter Druck zu der zweiten volumenveränderlichen Kammer (58) das freie Ende (2) des Rohrs (3) verformt, um es in Kontakt mit der Stirnfläche (49) der Zwischenhülse (46) zu halten und die fluiddichte Abdichtung der zweiten volumenveränderlichen Kammer (58) zu gewährleisten.

## Revendications

1. Appareil pour former des cloches lisses dans des tuyaux en matière thermoplastique (3), l'appareil comprenant une matrice extérieure (26) de forme tubulaire, qui a un axe longitudinal (27) donné et est configurée pour recevoir une extrémité libre chauffée (2) d'un tuyau (3) ; une broche intérieure (37), mobile à l'intérieur de la matrice extérieure (26) et de l'extrémité libre (2) du tuyau (3) et comprenant une partie étroite (39) de forme cylindrique, configurée pour venir en prise dans le tuyau (3), une première partie large (40) de forme cylindrique ou tronconique, une première partie intermédiaire (41) de forme cylindrique ou tronconique, disposée entre la partie étroite (39) et la première partie large (40), une seconde partie large (42) de forme cylindrique, et une seconde partie intermédiaire (43) de forme tronconique, disposée entre la première et la seconde partie large (40, 42) ; au moins une première chambre à volume variable (57), qui est au moins partiellement délimitée par la broche intérieure (37) et par l'extrémité libre (2) du tuyau (3) ; un manchon intermédiaire (46), mobile entre la matrice extérieure (26) et la broche intérieure (37) et délimité par une face d'extrémité (49) orientée axialement vers l'extrémité libre (2) du tuyau (3) ; et un premier circuit d'alimentation (53), au moins partiellement obtenu à travers la broche intérieure (37) et relié à la première chambre à volume variable (57) à une première distance (D1) d'une face d'extrémité (39b) de la broche intérieure (37) afin d'alimenter en fluide sous pression la première chambre à volume variable (57) ; et **caractérisé en ce qu'**il comprend en outre un deuxième circuit d'alimentation (59), qui est au moins partiellement obtenu à travers la broche intérieure (37) et est connecté à la première chambre à volume variable (57) à une seconde distance (D2) de la face d'extrémité (39b) de la broche intérieure (37) afin de fournir un fluide sous pression à la première chambre à volume variable (57), coupler l'extrémité libre (2) du tuyau (3) et la matrice extérieure (26) l'une à l'autre de manière étanche au fluide et modeler l'extrémité libre (2) du tuyau (3) contre la matrice extérieure (26) ; la seconde distance (D2) étant supérieure à la première distance (D1).

2. Appareil selon la revendication 1, dans lequel le premier et le deuxième circuit d'alimentation (53, 59) sont reliés à la première chambre à volume variable (57) dans la zone de la partie étroite (39) et de la première partie large (40), respectivement.

3. Appareil selon la revendication 2, dans lequel le deuxième circuit d'alimentation (59) est connecté à la première chambre à volume variable (57) à une distance (D) de la première partie intermédiaire (41) qui est au plus égale à une longueur (L) de la première partie large (40) et au moins égale à la moitié de la longueur (L) elle-même.

4. Appareil selon l'une quelconque des revendications précédentes et comprenant en outre une première chambre de refroidissement (44), obtenue à travers la broche intérieure (37) autour de l'axe longitudinal (27), et un premier circuit de refroidissement (45) pour alimenter un fluide de refroidissement à travers la première chambre de refroidissement (44).

5. Appareil selon l'une quelconque des revendications précédentes et comprenant en outre une seconde chambre de refroidissement (35), qui est obtenue à travers la matrice extérieure (26) autour de l'axe longitudinal (27), et un second circuit de refroidissement (36) pour alimenter un fluide de refroidissement à travers la seconde chambre de refroidissement (35).

6. Appareil selon l'une quelconque des revendications précédentes et comprenant en outre une seconde chambre à volume variable (58), qui est au moins partiellement délimitée par la matrice extérieure (26) et par l'extrémité libre (2) du tuyau (3), et un troisième circuit d'alimentation (63), qui est au moins partiellement obtenu à travers la matrice extérieure (26) et est connecté à la seconde chambre à volume variable (58) afin de fournir un fluide sous pression à la seconde chambre à volume variable (58) et de modeler l'extrémité libre (2) du tuyau (3) contre la broche intérieure (37).

7. Appareil selon la revendication 1 ou 6, dans lequel le manchon intermédiaire (46) comprend un circuit de drainage (50), qui est obtenu à travers le manchon intermédiaire (46) et a une ouverture d'entrée (64), qui se trouve sur une surface intérieure du manchon intermédiaire (46) afin d'évacuer le fluide sous pression fourni à la première chambre à volume variable (57) par le premier circuit d'alimentation (53) et/ou le fluide sous pression fourni à la première chambre à volume variable (57) par le deuxième circuit d'alimentation (59) et/ou le fluide sous pression fourni à la seconde chambre à volume variable (58) par le troisième circuit d'alimentation (63) dans l'environnement extérieur.

8. Procédé pour former des cloches lisses dans des tuyaux en matière thermoplastique (3) dans un appareil comprenant une matrice extérieure (26) de forme tubulaire, qui a un axe longitudinal (27) donné et est configurée pour recevoir une extrémité libre chauffée (2) d'un tuyau (3) ; une broche intérieure (37), mobile à l'intérieur de la matrice extérieure (26) et de l'extrémité libre (2) du tuyau (3) et comprenant une partie étroite (39) de forme cylindrique, configurée pour venir en prise dans le tuyau (3), une première partie large (40) de forme cylindrique ou tronconique, une première partie intermédiaire (41) de forme cylindrique ou tronconique, disposée entre la partie étroite (39) et la première partie large (40), une seconde partie large (42) de forme cylindrique et une seconde partie intermédiaire (43) de forme tronconique, disposée entre la première et la seconde partie large (40, 42) ; au moins une première chambre à volume variable (57), délimitée au moins partiellement par la broche intérieure (37) et par l'extrémité libre (2) du tuyau (3) ; et un manchon intermédiaire (46), mobile entre la matrice extérieure (26) et la broche intérieure (37) et délimité par une face d'extrémité (49) orientée axialement vers l'extrémité libre (2) du tuyau (3) ;
le procédé comprenant les étapes consistant à :
fournir un fluide sous pression à la première chambre à volume variable (57) au moyen d'un premier circuit d'alimentation (53), qui est au moins partiellement obtenu à travers la broche intérieure (37) et est relié à la première chambre à volume variable (57) à une première distance (D1) d'une face d'extrémité (39b) de la broche intérieure (37) ; et
déplacer la broche intérieure (37), par rapport à la matrice extérieure (26), dans une direction d'insertion (10) de manière à mettre en prise la première partie large (40), la seconde partie intermédiaire (43) et un segment initial de la seconde partie large (42) dans l'extrémité libre (2) ;
et **caractérisé en ce qu'**il comprend en outre l'étape consistant à :
fournir un fluide sous pression à la première chambre à volume variable (57) de manière à coupler l'extrémité libre (2) du tuyau (3) et la matrice extérieure (26) l'une à l'autre de manière étanche au fluide et à modeler l'extrémité libre (2) du tuyau (3) contre la matrice extérieure (26) au moyen d'un deuxième circuit d'alimentation (59), qui est au moins partiellement obtenu à travers la broche intérieure (37) et qui est relié à la première chambre à volume variable (57) à une seconde distance (D2) de la face d'extrémité (39b) de la broche intérieure (37), qui est supérieure à la première distance (D1).

9. Procédé selon la revendication 8, dans lequel l'appareil comprend en outre une seconde chambre à volume variable (58), qui est au moins partiellement délimitée par la matrice extérieure (26) et par l'extrémité libre (2) du tuyau (3) ;
le procédé comprenant en outre l'étape consistant à :
fournir un fluide sous pression à la seconde chambre à volume variable (58) de manière à façonner l'extrémité libre (2) sur la broche intérieure (37) et à former une cloche lisse (4) au moyen d'un troisième circuit d'alimentation (63), qui est au moins partiellement obtenu à travers la matrice extérieure (26) et est relié à la seconde chambre à volume variable (58).

10. Procédé selon la revendication 9, dans lequel l'alimentation en fluide sous pression de la seconde chambre à volume variable (58) déforme l'extrémité libre (2) du tuyau (3) de manière à la maintenir en contact avec la face d'extrémité (49) du manchon intermédiaire (46) et à assurer l'étanchéité au fluide de la seconde chambre à volume variable (58).
